# FASCICULE DE BREVET EUROPEEN

(11) **EP 1 544 489 B1**
(45) Date de publication et mention de la délivrance du brevet: **16.08.2006**
(21) Numéro de dépôt: 04292837.4
(22) Date de dépôt: 30.11.2004
(51) Int. Cl.: F16D 1/12

(54) **Mâchoire de cardan démontable d'une colonne de direction de véhicule automobile**
Demontierbares Kreuzgelenk für eine Kraftfahrzeug- Lenksäulenanordnung
Demountable Hookes joint yoke for vehicle steering column

(30) Priorité: 16.12.2003 FR 0314846
(43) Date de publication de la demande: 22.06.2005
(73) Titulaire: Nacam France S.A.S., 41100 Vendome (FR)
(72) Inventeur: Laisement, André, 41290 La Chapelle Encherie (FR); Lacaille, Christophe, 41100 Coulommiers la Tour (FR)
(74) Mandataire: Cabinet Martinet & Lapoux

(56) Documents cités:
- EP-A- 0 727 340
- EP-A- 1 247 719
- EP-A1- 0 292 442
- GB-A- 2 312 034

## Description

La présente invention se rapporte à une mâchoire de cardan, selon le préambule de la revendication 1 et telle que décrite dans GB-A-2312034 qui est notamment utilisé dans les colonnes de direction de véhicule automobile.

La colonne de direction actuelle d'un véhicule automobile comporte deux portions : une portion haute qui est reliée au volant de direction, et une portion intermédiaire qui est reliée au boîtier de direction commandant une tige de direction des roues directrices. La portion haute et la portion intermédiaire sont reliées l'une à l'autre par un joint homocinétique appelé joint de cardan. Ledit joint de cardan comprend un croisillon disposé entre deux mâchoires, dont l'une est raccordée à la portion haute et dont l'autre est raccordée à la portion intermédiaire.

Les joints de cardan connus comportent des mâchoires qui sont constituées par un seul élément monobloc.

De ce fait, le système de serrage, de la mâchoire de cardan sur l'arbre de transmission correspondant, a un axe qui a une orientation déterminée par rapport à l'axe d'articulation de la mâchoire.

Sur les voitures modernes, le compartiment moteur est très encombré, et l'accessibilité pour le serrage de la mâchoire sur l'arbre de transmission est très délicate, ce qui impose de concevoir pour chaque véhicule une mâchoire spécifique avec un coût de réalisation plus élevé.

Le but de la présente invention est de proposer une mâchoire de cardan, notamment pour une colonne de direction de véhicule automobile, qui évite les inconvénients décrits ci-dessus, afin d'avoir une mâchoire de cardan qui puisse s'adapter à tous les types de véhicule.

Selon l'invention, la mâchoire de cardan d'un arbre de transmission de mouvement est démontable et comporte :
- une portion cylindrique avec une face externe, qui est montée dans une face interne de l'extrémité cylindrique de la fourche d'articulation,
- la face externe et la face interne ayant des formes conjuguées de manière à avoir l'orientation voulue entre la fourche d'articulation et l'élément de raccordement, et d'obtenir ainsi des moyens de positionnement angulaire et des moyens de liaison en rotation de l'élément de raccordement par rapport à la fourche d'articulation,
- des moyens de liaison axiale entre l'élément de raccordement et la fourche d'articulation.

Afin que la mâchoire de cardan consiste en un seul et même ensemble, les formes conjuguées de la face externe et de la face interne sont dimensionnées de façon à obtenir un certain serrage entre la portion cylindrique et l'extrémité cylindrique, et d'obtenir ainsi les moyens de liaison axiale entre l'élément de raccordement et la fourche d'articulation.

Selon une variante de réalisation de l'invention, les formes conjuguées de la face externe et de la face interne consistent en des cannelures. Selon une autre variante de réalisation, les formes conjuguées de la face externe et de la face interne consistent en des dentelures.

Le système de serrage de la mâchoire de cardan de l'invention consiste en ce que l'élément de raccordement a une portion de serrage, qui comporte un élément cylindrique avec deux éléments de serrage. Les deux éléments de serrage sont séparés par une ouverture axiale débouchant dans une face interne de l'élément cylindrique, l'axe de serrage étant sensiblement perpendiculaire à ladite ouverture axiale. De plus, une rainure tangentielle transversale est agencée sur la portion cylindrique, et à côté des éléments de serrage. Enfin, les moyens de serrage consistent en une vis de serrage.

Selon l'invention, l'élément de raccordement de la mâchoire de cardan a des faces internes, qui ont des formes conjuguées avec l'arbre de transmission pour assurer la liaison en rotation. Avantageusement, les formes conjuguées des faces internes de l'élément de raccordement et l'arbre de transmission consistent en des cannelures.

Selon une variante de réalisation de l'invention, la mâchoire de cardan a l'élément de raccordement, qui est constitué par une pièce forgée et usinée. Selon une autre variante de réalisation, l'élément de raccordement est constitué par une pièce en tôle emboutie usinée. Selon encore une autre variante de réalisation, l'élément de raccordement est constitué par une pièce en étiré coupé et usiné.

La mâchoire de cardan selon l'invention présente ainsi l'avantage d'offrir un ensemble, qui est réalisé à partir d'une fourche d'articulation, qui peut être standard, avec un élément de raccordement, qui peut également être standard. Ceci permet des fabrications en grande série avec un coût plus faible. De plus un avantage déterminant de l'invention est de permettre une orientation de l'élément de raccordement par rapport à la fourche d'articulation, afin que la mâchoire de cardan s'adapte à chaque type de véhicule avec un montage plus accessible et plus facile.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :
- la figure 1 est une vue en perspective de la mâchoire de cardan selon l'invention ;
- la figure 2 est une vue en perspective de l'élément de raccordement de la figure 1 ;
- la figure 3 est une vue en perspective analogue à celle de la figure 1 d'un autre mode de réalisation de l'invention ;
- la figure 4 est une vue en perspective de l'élément de raccordement de la figure 3 ;
- la figure 5 est une coupe suivant le plan V-V de l'élément de raccordement de la figure 1 avec l'arbre de transmission ;
- la figure 5A est une coupe suivant le plan V-V de la figure 1 avec l'arbre de transmission ;
- la figure 6 est une coupe transversale partielle selon le plan VI-VI de la figure 5 ;
- la figure 7 est une coupe transversale partielle selon le plan VII-VII de la figure 5A ;
- la figure 7A est une coupe analogue à celle de la figure 7 d'une variante de réalisation.

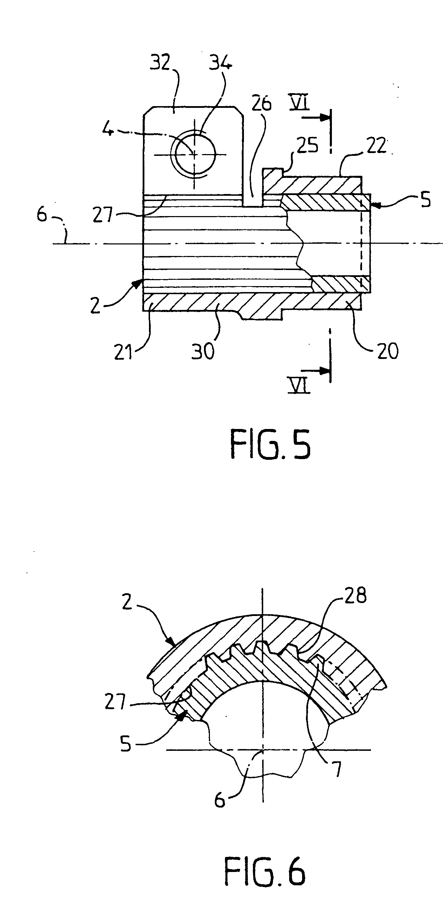

La mâchoire de cardan selon l'invention se monte sur un arbre de transmission de mouvement 5 représenté en coupe axiale sur les figures 5 et 6, et ayant un axe 6.

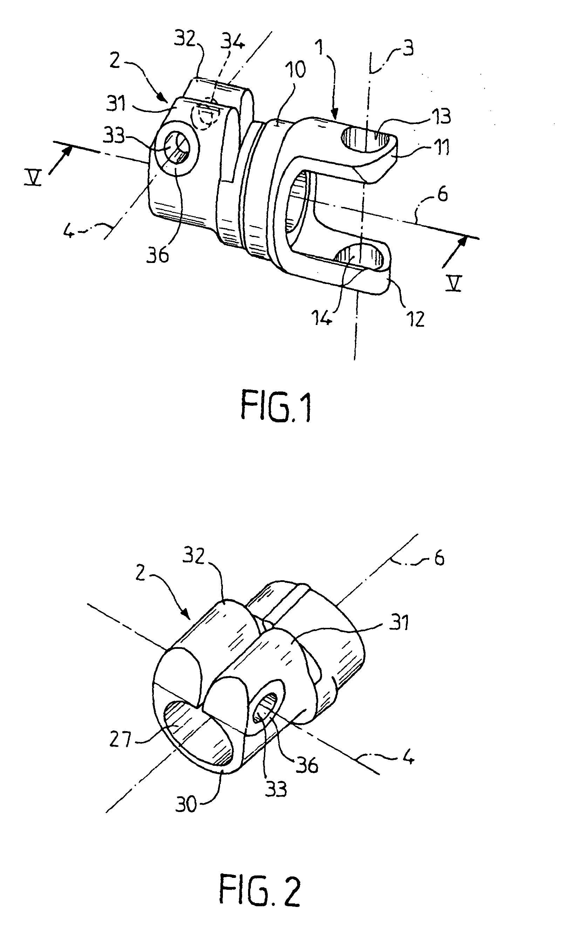

Comme cela est dessiné sur les figures 1 et 2, la mâchoire de cardan est démontable et elle comprend une fourche d'articulation 1 et un élément de raccordement 2.

La fourche d'articulation 1 est raccordée à une autre fourche d'articulation, par l'intermédiaire d'un croisillon afin de constituer le joint de cardan. La fourche d'articulation 1 comprend un axe d'articulation 3 qui est aussi un des deux axes du croisillon.

L'élément de raccordement 2 se monte sur l'arbre de transmission de mouvement 5, et est bloqué par un système de serrage, qui est agencé sur ledit élément de raccordement, qui comprend l'axe de serrage 4.

La fourche d'articulation 1 est montée sur l'élément de raccordement 2 afin de constituer la mâchoire de cardan. La fourche d'articulation 1 et l'élément de raccordement 2 ont le même axe, qui est l'axe 6 de l'arbre de transmission de mouvement 5.

Afin de pouvoir orienter, selon la demande, l'axe de serrage 4 par rapport à l'axe d'articulation 3, des moyens de positionnement angulaires sont agencés entre l'élément de raccordement 2 portant l'axe de serrage 4 et la fourche d'articulation 1 qui comporte l'axe d'articulation 3.

De plus, des moyens de liaison en rotation et des moyens de liaison axiale sont prévus entre l'élément de raccordement 2 et la fourche d'articulation 1, qui forment ainsi un même ensemble.

Comme cela est représenté sur les figures 1, 3 et 6, la fourche d'articulation 1 comporte une extrémité cylindrique 10 d'axe 6, qui est munie de deux bras 11 et 12.

Chaque bras 11 et 12 comporte un trou d'articulation correspondant 13 et 14. Les trous d'articulation 13 et 14 sont alignés selon l'axe d'articulation 3.

L'extrémité cylindrique 10 possède une face interne 15 cylindrique et une face d'appui 16 perpendiculaire à l'axe de transmission 6.

L'élément de raccordement 2 représenté sur les figures 1 à 4 et plus précisément sur les figures 5 et 6, est constitué par une portion cylindrique 20 et une portion de serrage 21.

Suivant l'axe de transmission 6, la portion de serrage 21 est disposée dans le prolongement de la portion cylindrique 20.

La portion cylindrique 20 comporte une face externe 22 cylindrique d'axe 6 et une face d'appui 25 perpendiculaire à l'axe de transmission 6.

La portion de serrage 21 comporte un élément cylindrique 30 et deux éléments de serrage 31 et 32. L'élément cylindrique 30 est dans le prolongement de la portion cylindrique 20, avec le même axe 6. L'élément cylindrique 30 et la portion cylindrique 20 ont une même face interne 27 qui est cylindrique et se monte sur l'arbre de transmission 5. Les deux éléments de serrage 31 et 32 sont séparés par une ouverture axiale 35, qui débouche dans la face interne 27. L'axe de serrage 4 est matérialisé par un trou 33 de l'élément de serrage 31 et par un trou 34 de l'élément de serrage 32, les trous 33 et 34 étant alignés. Le trou 33 est un trou de passage d'une vis de serrage, qui vient s'engager dans le trou fileté 34 et s'appliquer contre une face d'appui 36 aménagée à l'extérieur de l'élément de serrage 31. L'axe de serrage 4 est perpendiculaire à l'ouverture axiale 35.

Une rainure tangentielle transversale 26 est agencée sur la portion cylindrique 20. La rainure tangentielle 26 est disposée à côté des éléments de serrage 31 et 32, d manière que lesdits éléments de serrage aient la souplesse nécessaire pour permettre le blocage.

L'élément de raccordement 2 est monté dans la fourche d'articulation 1, en engageant la portion cylindrique 20 dans l'extrémité cylindrique 10, jusqu'à ce que la face d'appui 25 s'applique contre la face d'appui 16. La face externe 2 coopère avec la face interne 15, en ayant des formes conjuguées pour avoir l'orientation voulue entre l'élément de raccordement 2 et la fourche d'articulation 1, et obtenir ainsi les moyens de positionnement angulaire et les moyens de liaison en rotation.

De plus, les formes conjuguées de la face externe 22 et de la face interne 15 sont dimensionnées pour obtenir un certain serrage entre la portion cylindrique 20 et l'extrémité cylindrique 10. Cette disposition assure le maintien de la liaison en rotation, et permet d'obtenir les moyens de liaison axiale entre l'élément de raccordement 2 et la fourche d'articulation 1.

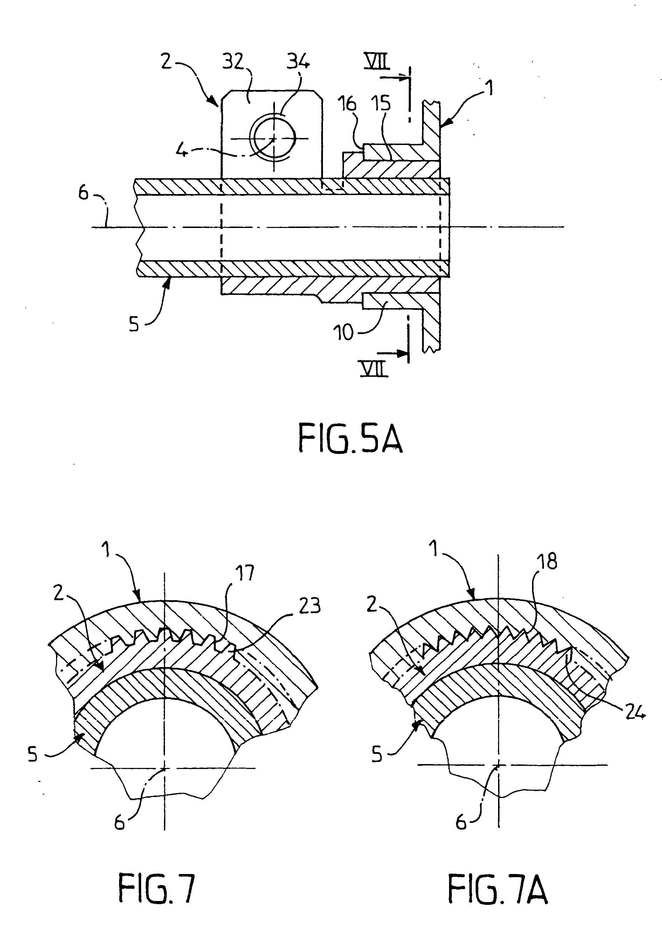

Sur la figure 7, les formes conjuguées consistent en des cannelures 23 réalisées sur la face externe 22, qui coopèrent avec des cannelures 17 réalisées sur la face interne 15.

Sur la figure 7A, les formes conjuguées consistent en des dentelures 24 réalisées sur la face externe 22, qui coopèrent avec des dentelures 18 réalisées sur la face interne 15.

Il est ainsi possible de disposer l'axe de serrage 4 par rapport à l'axe d'articulation 3, selon chaque colonne de direction.

La portion cylindrique 20 et la portion de serrage 21 de l'élément de raccordement 2 ont des faces internes 27, qui ont des formes conjuguées avec l'arbre de transmission 5 pour assurer la liaison en rotation de la mâchoire de cardan avec ledit arbre de transmission 5.

Sur la figure 6, les formes conjuguées consistent en des cannelures 28 réalisées sur les faces internes 27 qui coopèrent avec des cannelures 7 réalisées sur l'arbre de transmission 5.

Le blocage est assuré par la vis de serrage 9, qui rapproche les deux éléments de serrage 31 et 32.

L'élément de raccordement 2 peut être obtenu de plusieurs manières.

Dans le cas des figures 1 et 2, l'élément de raccordement 2 est constitué par une pièce en tôle emboutie avec un cordon de soudure le long de la portion cylindrique 20, ladite pièce étant ensuite usinée.

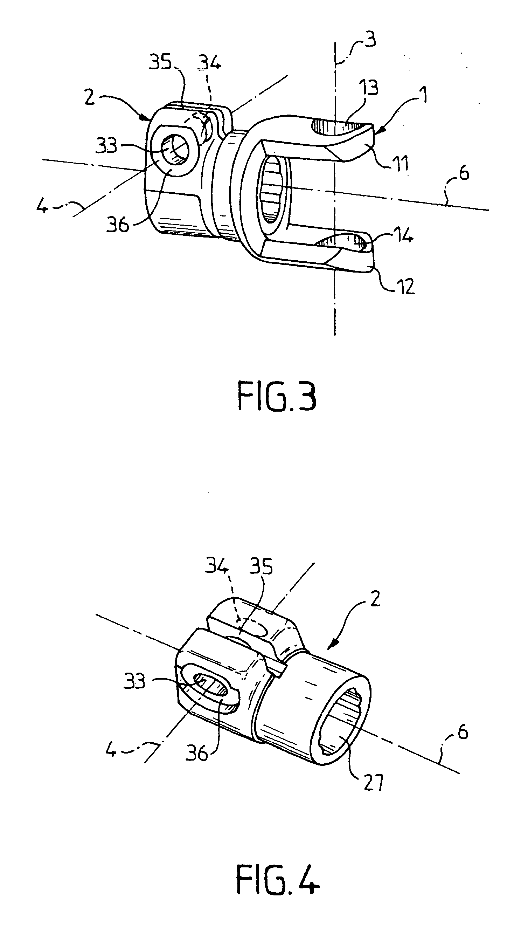

Dans le cas des figures 3 et 4, l'élément de raccordement 2 est constitué par une pièce forgée et usinée.

Dans un autre cas, l'élément de raccordement 2 est constitué par une pièce en étire coupé et usiné.

## Revendications

1. Mâchoire de cardan démontable d'un arbre de transmission de mouvement (5), comprenant un axe d'articulation (3) de la mâchoire et un axe de serrage (4) sur l'arbre de transmission (5), comportant
- une fourche d'articulation (1) comprenant l'axe d'articulation (3) et une extrémité cylindrique (10),
- un élément de raccordement (2) à l'arbre de transmission de mouvement (5),
- la fourche d'articulation (1) et l'élément de raccordement (2) ayant un même axe destiné à correspondre à l'axe (6) de l'arbre de transmission de mouvement (5),
- ledit élément de raccordement (2) comprenant une portion de serrage (21) comportant l'axe de serrage (4) **caractérisée en ce que** l'élément de raccordement comprend une portion cylindrique (20) avec une face externe (22), qui est montée dans une face interne (15) de l'extrémité cylindrique (10) de la fourche d'articulation (1),
- la face externe (22) et la face interne (15) ayant des formes conjuguées de manière à avoir l'orientation voulue entre la fourche d'articulation (1) et l'élément de raccordement (2), et d'obtenir ainsi des moyens de positionnement angulaire et des moyens de liaison en rotation de l'élément de raccordement (2) par rapport à la fourche d'articulation (1),
- des moyens de liaison axiale entre l'élément de raccordement (2) et la fourche d'articulation (1).

2. Mâchoire de cardan selon la revendication 1, **caractérisée en ce que** les formes conjuguées de la face externe (22) et de la face interne (15) sont dimensionnées de façon à obtenir un certain serrage entre la portion cylindrique (20) et l'extrémité cylindrique (10) et d'obtenir les moyens de liaison axiale entre l'élément de raccordement (2) et la fourche d'articulation (1).

3. Mâchoire de cardan selon la revendication 2, **caractérisée en ce que** les formes conjuguées de la face externe (22) et de la face interne (15) consistent en des cannelures (23) et (17).

4. Mâchoire de cardan selon la revendication 2, **caractérisée en ce que** les formes conjuguées de la face externe (22) et de la face interne (15) consistent en des dentelures (24 et 18).

5. Mâchoire de cardan selon la revendication 1, **caractérisée en ce que** l'élément de raccordement (2) a une portion de serrage (21) qui comporte un élément cylindrique (30) avec deux éléments de serrage (31) et (32), qui sont séparés par une ouverture axiale (35) débouchant dans une face interne (27) de l'élément cylindrique (30), l'axe de serrage (4) étant sensiblement perpendiculaire à ladite ouverture axiale (35).

6. Mâchoire de cardan selon la revendication 5, **caractérisée en ce qu'**une rainure tangentielle transversale (26) est agencée sur la portion cylindrique (20), et à côté des éléments de serrage (31 et 32).

7. Mâchoire de cardan selon la revendication 5 ou 6, **caractérisée en ce que** des moyens sont prévus pour serrer les éléments de serrage, lesdits moyens consistant en une vis de serrage.

8. Mâchoire de cardan selon la revendication 1, **caractérisée en ce que** l'élément de raccordement (2) a des faces internes (27) qui ont des formes conjuguées avec l'arbre de transmission (5) pour assurer la liaison en rotation.

9. Mâchoire de cardan selon la revendication 8, **caractérisée en ce que** lesdites formes conjuguées consistent en des cannelures (28 et 7).

10. Mâchoire de cardan selon la revendication 1, **caractérisée en ce que** l'élément de raccordement (2) est constitué par une pièce forgée et usinée.

11. Mâchoire de cardan selon la revendication 1, **caractérisée en ce que** l'élément de raccordement (2) est constitué par une pièce en tôle emboutie usinée.

12. Mâchoire de cardan selon la revendication 1, **caractérisée en ce que** l'élément de raccordement (2) est constitué par une pièce en étiré coupé et usiné.

## Claims

1. yoke member of cardan joint dismountable from a motion transmission shaft (5), having a yoke member joint axis (3) and an axis (4) clamping on the transmission shaft (5), and comprising
- a joint fork (1) having the joint axis (3) and a cylindrical end (10),
- a member (2) connecting to the motion transmission shaft (5),
- the yoke member (1) and the connecting member (2) having a common axis intended to correspond to the axis (6) of the motion transmission shaft (5),
- the joint fork (1) and the connecting member (2) having a same axis intended to correspond to the axis (6) of the motion transmission shaft (5),
- said connecting member (2) comprising a clamping portion (21) having the clamping axis (4),
**characterized in that** the connecting member (2) comprises a cylindrical portion (20) with an outer face (22) which is mounted in an inner face (15) of the cylindrical end (10) of the joint fork (1),
- the outer face (22) and the inner face (15) having conjugate shapes so as to obtain the desired orientation between the joint fork (1) and the connecting member (2), and thereby to obtain means for angularly positioning and means for rotationally connection the connecting member (2) with respect to the joint fork (1),
- means for axial connecting the connecting member (2) and the joint fork (1).

2. A yoke member of cardan joint according to claim 1, **characterized in that** the conjugate shapes of the outer face (22) and the inner face (15) are dimensioned so as to obtain a certain tightening between the cylindrical portion (20) and the cylindrical end (10) and thus to obtain the axial connecting means between the connecting member (2) and the joint yoke member (1).

3. A yoke member of cardan joint according to claim 1, **characterized in that** the conjugate shapes of the outer face (22) and of the inner face (15) consist of grooves (23 and 17).

4. A yoke member of cardan joint according to claim 1, **characterized in that** the conjugate shapes of the outer face (22) and of the inner face (15) consist of indentations (24 and 18).

5. A yoke member of cardan joint according to claim 1, **characterized in that** the connecting member (2) has a clamping portion (21) that comprises a cylindrical element (30) with two clamping elements (31 and 32), which are separated by an axial opening (35) that leads into an inner face (27) of the cylindrical element (30), while the clamping axis (4) is substantially normal to said axial opening (35).

6. A yoke member of cardan joint according to claim 5, **characterized in that** a transversal tangential slot (26) is provided on the cylindrical portion (20) adjacent the clamping elements (31 and 32).

7. A yoke member of cardan joint according to claim 5 or 6, **characterized in that** means are provided to clamp the clamping elements, the clamping means consisting of a clamping screw.

8. A yoke member of cardan joint according to claim 1, **characterized in that** the connecting member (2) has inner faces (27) which have shapes that are conjugate with the transmission shaft (5) so as to ensure the rotational connection.

9. A yoke member of cardan joint according to claim 8, **characterized in that** said conjugate shapes consist of grooves (28 and 7).

10. A yoke member of cardan joint according to claim 1, **characterized in that** the connecting member (2) consists of a forged and machined piece.

11. A yoke member of cardan joint according to claim 1, **characterized in that** the connecting member (2) consists of a piece of shaped sheet metal.

12. A yoke member of cardan joint according to claim 1, **characterized in that** the connecting member (2) consists of a cut and machined drawn piece.

## Patentansprüche

1. Demontierbare Kardanklaue einer Bewegungsübertragungswelle (5), umfassend eine Gelenkachse (3) der Klaue und eine Klemmachse (4) für die Befestigung auf der Übertragungswelle (5), **dadurch gekennzeichnet, dass** sie
- eine Gelenkgabel (1), bestehend aus der Gelenkachse (3) und einem zylindrischen Ende (10),
- ein Anschlussteil (2) an die Bewegungsübertragungswelle (5),
- wobei die Gelenkgabel (1) und das Anschlussteil (2) ein und dieselbe Achse (6) aufweisen, die der Achse (6) der Bewegungsübertragungswelle (5) entsprechen soll,
- wobei das Anschlussteil (2) einen Klemmabschnitt (21) mit der Klemmachse (4) und einen zylindrischen Abschnitt (20) mit einer Außenfläche (22) umfasst, der in eine Innenfläche (15) des zylindrischen Endes (10) der Gelenkgabel (1) eingesetzt ist,
- wobei die Außenfläche (22) und die Innenfläche (15) aufeinander abgestimmte Formen haben, um die gewünschte Ausrichtung zwischen der Gelenkgabel (1) und dem Anschlussteil (2) zu erhalten und damit über Mittel zur Gewährleistung einer Winkelstellung und Mittel zur drehenden Verbindung des Anschlussteils (2) gegenüber der Gelenkgabel (1) zu verfügen,
- sowie Mittel zur axialen Verbindung des Anschlussteils (2) mit der Gelenkgabel (1) umfasst.

2. Kardanklaue nach Anspruch 1, **dadurch gekennzeichnet, dass** die aufeinander abgestimmten Formen der Außenfläche (22) und der Innenfläche (15) so dimensioniert sind, dass es zu einer gewissen Klemmwirkung zwischen dem zylindrischen Abschnitt (20) und dem zylindrischen Ende (10) kommt und sich die axialen Verbindungsmittel zwischen dem Anschlussteil (2) und der Gelenkgabel (1) ergeben.

3. Kardanklaue nach Anspruch 2, **dadurch gekennzeichnet, dass** die aufeinander abgestimmten Formen der Außenfläche (22) und der Innenfläche (15) als Kerben (23) und (17) ausgeführt sind.

4. Kardanklaue nach Anspruch 2, **dadurch gekennzeichnet, dass** die aufeinander abgestimmten Formen der Außenfläche (22) und der Innenfläche (15) als Verzahnungen (24) und (18) ausgeführt sind.

5. Kardanklaue nach Anspruch 1, **dadurch gekennzeichnet, dass** das Anschlussteil (2) einen Klemmabschnitt (21) aufweist, der aus einem zylindrischen Teil (30) mit zwei Klemmelementen (31) und (32) besteht, die durch einen axialen Spalt (35) voneinander getrennt sind, der in einer Innenfläche (27) des zylindrischen Teils (30) mündet, wobei die Klemmachse (4) im Wesentlichen senkrecht zu dem axialen Spalt (35) verläuft.

6. Kardanklaue nach Anspruch 5, **dadurch gekennzeichnet, dass** ein tangential verlaufende Querrille (26) auf dem zylindrischen Abschnitt (20) und neben den Klemmelementen (31 und 32) angeordnet ist.

7. Kardanklaue nach Anspruch 5 oder 6, **dadurch gekennzeichnet, dass** ein Mittel vorgesehen ist, um die Klemmelemente anzuziehen, wobei dieses Mittel aus einer Anziehschraube besteht.

8. Kardanklaue nach Anspruch 1, **dadurch gekennzeichnet, dass** das Anschlussteil (2) Innenflächen (27) mit auf die Übertragungswelle (5) abgestimmten Formen aufweist, um die drehende Verbindung zu gewährleisten.

9. Kardanklaue nach Anspruch 8, **dadurch gekennzeichnet, dass** die genannten abgestimmten Flächen als Kerben (28 und 7) ausgeführt sind.

10. Kardanklaue nach Anspruch 1, **dadurch gekennzeichnet, dass** das Anschlussteil (2) aus einem geschmiedeten und bearbeiteten Teil gebildet ist.

11. Kardanklaue nach Anspruch 1, **dadurch gekennzeichnet, dass** das Anschlussteil (2) aus einem bearbeiteten Teil aus tiefgezogenem Blech gebildet ist.

12. Kardanklaue nach Anspruch 1, **dadurch gekennzeichnet, dass** das Anschlussteil (2) aus einem zugeschnittenen und bearbeiteten gezogenen Teil gebildet ist.
